# EUROPÄISCHE PATENTANMELDUNG

(11) **EP 4 190 613 A1**
(43) Veröffentlichungstag der Anmeldung: **07.06.2023**
(21) Anmeldenummer: 22200009.3
(22) Anmeldetag: 06.10.2022
(51) Int. Cl.: B60K 35/00, B60K 37/04, G02F 1/1333

(54) **VERFAHREN ZUM ZUSAMMENBAU EINER ANZEIGEEINHEIT EINES KRAFTFAHRZEUGS UND NACH DEM VERFAHREN ZUSAMMENGEBAUTE ANZEIGEEINHEIT**

(30) Priorität: 02.12.2021 DE 102021131779
(71) Anmelder: Marelli Stuttgart (Germany) GmbH, 70563 Stuttgart (DE)
(72) Erfinder: GAMMOUNE, Mohamed, Stuttgart (DE); MISHRA, Navaneetham, Stuttgart (DE); RUGGERO, Giusti, Corbetta (MI) (IT)
(74) Vertreter: Herrmann, Jochen

(57) **Zusammenfassung**

Die Erfindung betrifft ein Verfahren zum Zusammenbau einer Anzeigeeinheit (2) eines Kraftfahrzeugs, wobei die Anzeigeeinheit (2) mehrere Teile aufweist, die Teile umfassend eine rückseitige Abdeckung (4), eine elektrische Leiterplatte (6), einen Tragrahmen (8), ein flächiges Anzeigeelement (10) und eine transparente Abdeckscheibe (12), wobei mindestens zwei der Teile (8, 12, 20) der Anzeigeeinheit (2) mittels eines ersten Klebstoffs (22) aneinander befestigt werden. Um den Zusammenbau zu vereinfachen und zu beschleunigen wird vorgeschlagen, dass als erster Klebstoff (22) ein chemisch härtender Klebstoff, vorzugsweise ein 2-Komponenten Klebstoff, verwendet wird und dass mindestens zwei der Teile (8, 20) der Anzeigeeinheit (2) mittels eines UV-härtenden Klebstoffs (24) miteinander verklebt werden.

## Beschreibung

Die vorliegende Erfindung betrifft ein Verfahren zum Zusammenbau einer Anzeigeeinheit eines Kraftfahrzeugs. Die Anzeigeeinheit weist mehrere Teile auf, wobei die Teile eine rückseitige Abdeckung, eine elektrische Leiterplatte, einen Tragrahmen, ein flächiges Anzeigeelement und eine transparente Abdeckscheibe umfassen. Mindestens zwei der Teile der Anzeigeeinheit werden mittels eines ersten Klebstoffs aneinander befestigt.

Die Erfindung betrifft außerdem eine Anzeigeeinheit eines Kraftfahrzeugs. Die Anzeigeeinheit weist mehrere Teile auf, wobei die Teile eine rückseitige Abdeckung, eine elektrische Leiterplatte, einen Tragrahmen, ein flächiges Anzeigeelement und eine transparente Abdeckscheibe umfassen. Mindestens zwei der Teile der Anzeigeeinheit sind mittels eines ersten Klebstoffs aneinander befestigt.

In modernen Kraftfahrzeugen werden in zunehmender Anzahl Anzeigeeinheiten in der Form von Bildschirmen, Monitoren oder Displays eingesetzt. Selbst vormals analoge Instrumente der Armaturentafel werden in zunehmendem Maße durch solche digitalen Anzeigeeinheiten ersetzt. Vorteile der digitalen Anzeigeeinheiten bestehen in einem geringeren Platzbedarf beim Einbau in die Armaturentafel, insbesondere in einer gegenüber analogen Zeigerinstrumenten geringeren Einbautiefe, in einer einfacheren und kostengünstigeren Montage (geringere Teileanzahl gegenüber analogen Zeigerinstrumenten), in einem flexibleren Einsatz (frei programmierbare Darstellung auf der digitalen Anzeigeeinheit), und in einer hohen Zuverlässigkeit und Lebensdauer (keine bewegten Teile).

Die digitalen Anzeigeeinheiten umfassen bspw. eine rückseitige (dem Betrachter der Anzeigeeinheit abgewandte) Abdeckung, eine elektrische Leiterplatte, einen Tragrahmen, ein flächiges Anzeigeelement (z.B. ein LCD-, LED-, OLED- oder sonstiges Display) und eine (dem Betrachter zugewandte) transparente Abdeckscheibe, welche die Anzeigeeinheit nach außen hin abschließt, das Innere der Anzeigeeinheit vor Feuchtigkeit, mechanischen oder chemischen Beeinträchtigungen schützt und einen freien Blick auf das darunter liegende flächige Anzeigeelement erlaubt. Im Rahmen des Zusammenbaus der bekannten Anzeigeeinheiten werden die einzelnen Teile zumindest teilweise aneinander befestigt, um eine separat handhabbare Anzeigeeinheit zu erhalten, die an den Kunden (z.B. einen Kraftfahrzeughersteller) geliefert und dort in eine entsprechende Einbauöffnung im Innenraum eines Kraftfahrzeugs eingebaut und elektrisch kontaktiert werden kann. Nach der mechanischen Befestigung in der Einbauöffnung und der elektrischen Kontaktierung ist die Anzeigeeinheit voll funktionsfähig.

Zum Befestigen der verschiedenen Teile der Anzeigeeinheit aneinander werden im Stand der Technik unterschiedliche Verfahren eingesetzt. So können an miteinander zu verbindenden Teilen Rastelemente ausgestaltet werden, die beim Zusammensetzen der Teile miteinander in Wirkverbindung treten und so die beiden Teile aneinander befestigen. Nachteilig an Rastverbindungen ist jedoch, dass die Rastelemente relativ großbauend sind, zusätzlichen Platz erfordern und bei der Bildung der Rastverbindung abbrechen oder anderweitig beschädigt werden können.

Ferner wäre es denkbar, miteinander zu verbindende Teile der Anzeigeeinheit mittels separater Befestigungselemente (z.B. Schrauben, Bolzen und Nieten) aneinander zu befestigen. Nachteilig ist dabei jedoch, dass separate Befestigungselemente benötigt werden und die Bildung der Befestigungsverbindung zwischen den beiden Teilen recht aufwendig ist. Zudem kann es aufgrund der separaten Befestigungselemente zu Spannungen zwischen den aneinander befestigten Teilen, aber auch im Verhältnis zu anderen Teilen der Anzeigeeinheit kommen kann. Diese können zu unerwünschten Verformungen der Teile oder sogar zu Rissen in den Teilen führen. Bei Befestigung des flächigen Anzeigeelements mittels separater Befestigungselemente kann es zur Anzeige von Fehlfarben und/oder Fehlanzeigen (z.B. schwarze Bereiche oder Kaleidoskopeffekt; sog. Black Mura Effect) kommen.

Schließlich ist es im Stand der Technik auch bekannt, Teile einer digitalen Anzeigeeinheit mittels Klebstoff aneinander zu befestigen. Dabei werden insbesondere chemisch härtende 1- oder 2-Komponenten Klebstoffe verwendet. Problematisch dabei ist allerdings, dass die Verwendung von chemisch härtenden Klebestoffen die Herstellungszeiten deutlich verlängern, da diese Klebestoffe erst nach einer relativ langen Zeit soweit ausgehärtet sind, dass eine Weiterverarbeitung der Anzeigeeinheit möglich ist. Ein vollständiges Aushärten dieser Klebstoffe tritt oft erst nach mehreren Stunden ein.

Ausgehend von dem beschriebenen Stand der Technik liegt der vorliegenden Erfindung die Aufgabe zugrunde, das Verfahren zum Zusammenbau bzw. zur Montage einer Anzeigeeinheit der eingangs genannten Art dahingehend auszugestalten und weiterzubilden, dass der Zusammenbau vereinfacht und/oder beschleunigt wird.

Zur Lösung dieser Aufgabe wird ein Verfahren mit den Merkmalen des Anspruchs 1 vorgeschlagen. Insbesondere wird ausgehend von dem Verfahren der eingangs genannten Art vorgeschlagen, dass als erster Klebstoff ein chemisch härtender Klebstoff verwendet wird und dass mindestens zwei der Teile der Anzeigeeinheit mittels eines UV-härtenden Klebstoffs miteinander verklebt werden. Als erster Klebstoff wird bevorzugt ein 2-Komponenten-Klebstoff verwendet. Besonders bevorzugt sind die mindestens zwei Teile der Anzeigeeinheit, die mittels des chemisch härtenden Klebstoffs verklebt werden, und die mindestens zwei Teile der Anzeigeeinheit, die mittels des UV-härtenden Klebstoffs verklebt werden, mindestens zwei gleiche Teile der Anzeigeeinheit. Mithin werden die gleichen beiden Teile der Anzeigeeinheit zum einen mittels des ersten chemisch härtenden Klebstoffs und zum anderen mittels des UV-härtenden Klebstoffs miteinander verklebt.

Mit Hilfe des vorgeschlagenen Verfahrens ist es bspw. möglich, das flächige Anzeigeelement und die transparente Abdeckscheibe der Anzeigeeinheit ohne separater Befestigungselemente (z.B. Schrauben) aneinander zu befestigen. Die oben bezüglich der bekannten Befestigungsarten genannten Nachteile werden überwunden. Insbesondere kann bei der Erfindung bspw. eine strukturelle Verbindung zwischen dem flächigen Anzeigeelement und der transparenten Abdeckscheibe (bspw. über den Tragrahmen und einen Anzeigerahmen des flächigen Anzeigeelements) und der übrigen Anzeigeeinheit verbessern. Der Verzicht auf separate Befestigungsmittel (bspw. Schrauben) zur Befestigung des flächigen Anzeigeelements an der transparenten Abdeckscheibe bzw. an dem Tragrahmen verhindert Spannungen in dem Anzeigeelement und damit die Entstehung von schwarzen Bereichen (sog. Black Mura Effect) oder einem Kaleidoskopeffekt.

Bei dem Verfahren handelt es sich um ein 2-stufiges Klebeverfahren. Das 2-stufige Verfahren erlaubt es, die Unterbaugruppen separat zu handeln, ohne auf das Aushärten des chemisch härtenden Klebstoffs warten zu müssen, da der 2K-härtbare Klebstoff in der Zwischenzeit nach dem Aushärten mittels UV-Strahlung sehr stabil ist. In einem ersten Schritt wird der chemisch aushärtenden Klebstoff auf mindestens eines der Teile aufgetragen und an mindestens einem anderen Teil befestigt. Auf diese Weise kann bspw. mittels des chemisch aushärtenden Klebstoffs eine Verbindung zwischen der transparenten Abdeckscheibe und dem Tragrahmen hergestellt werden. In einem zweiten Schritt wird der UV-härtende Klebstoff auf mindestens eines der Teile der Anzeigeeinheit aufgetragen und an mindesten seinem anderen Teil befestigt. Zumindest eines der Teile, die mittels des UV-härtenden Klebstoffs miteinander verbunden wurden, war zuvor Teil der Verbindung zwischen den mittels des chemisch aushärtenden Klebstoffs aneinander befestigten Teile. Auf diese Weise kann bspw. mittels des UV-härtenden Klebstoffs eine Verbindung zwischen dem flächigen Anzeigeelement bzw. einem Anzeigerahmen des flächigen Anzeigeelements und dem Tragrahmen hergestellt werden. Die beiden Schritte können auch zeitgleich ausgeführt werden. Das Verkleben von mindestens zwei der Teile der Anzeigeeinheit erfolgt somit in zwei Schritten mit unterschiedlichen Arten von Klebstoffen.

Anders als bei einer Befestigung des flächigen Anzeigeelements an dem Tragrahmen mittels Schrauben, wirkt bei der Erfindung eine Zugspannung nicht direkt auf das flächige Anzeigeelement. Außerdem gibt es bei der Erfindung keine Übertragung von Spannungen von dem Tragrahmen auf die Abdeckscheibe, wenn die rückseitige Abdeckung in einem nachgeordneten Schritt mittels separater Befestigungselemente (bspw. mittels Schrauben) an dem Tragrahmen befestigt wird, da der chemisch härtende Klebstoff noch immer ungehärtet ist und eine flüssige oder viskose Konsistenz aufweist. Ferner erlaubt das Verfahren, dass das flächige Anzeigeelement bzw. ein Anzeigerahmen des Anzeigeelements nur seitlich und nicht auf einer Rückseite des flächigen Anzeigeelements verklebt wird. Der UV-härtende Klebstoff kann auch zur Befestigung eines Anzeigerahmens des flächigen Anzeigeelements an dem Tragrahmen verwendete werden.

Das Verkleben der Teile der Anzeigeeinheit kann mit der Erfindung auf ein Verkleben zwischen Tragrahmen und flächigem Anzeigeelement beschränkt werden. Dann wird der Tragrahmen an der rückseitigen Abdeckung befestigt, bspw. durch Verschrauben. Die fertig montierte Anzeigeeinheit wird dann in eine Einbauöffnung in einer Anzeigetafel eines Kraftfahrzeugs eingesetzt, darin befestigt und elektrisch kontaktiert. Das beschriebene Konzept kann für ein im eingebauten Zustand einem Fahrer des Kraftfahrzeugs zugewandtes Kombiinstrument, insbesondere ein freiprogrammierbares Kombiinstrument, für ein in einer Mittelkonsole der Armaturentafel angeordnetes Zentraldisplay oder für ein im eingebauten Zustand einem oder mehreren der Mitfahrer zugewandtes Passengerdisplay Verwendung finden.

Besonders bevorzugt ist es, wenn das flächige Anzeigeelement der Anzeigeeinheit einen Flachmonitor (sog. Display) oder ein durch eine Hintergrundbeleuchtungseinheit (sog. Back Light Unit) und ein hinterleuchtetes flächiges LCD-Panel umfasst.

Weitere Merkmale und Vorteile der vorliegenden Erfindung werden nachfolgend unter Bezugnahme auf bevorzugte Ausführungsbeispiele und die Figuren näher erläutert. Es zeigen:
- Fig. 1: einen Schnitt durch eine schematisch dargestellte erfindungsgemäße Anzeigeeinheit gemäß einer ersten Ausführungsform,
- Fig. 2: einen Schnitt durch eine schematisch dargestellte erfindungsgemäße Anzeigeeinheit gemäß einer zweiten Ausführungsform und
- Fig. 3: ein Diagramm zur Veranschaulichung des erfindungsgemäßen Verfahrens.

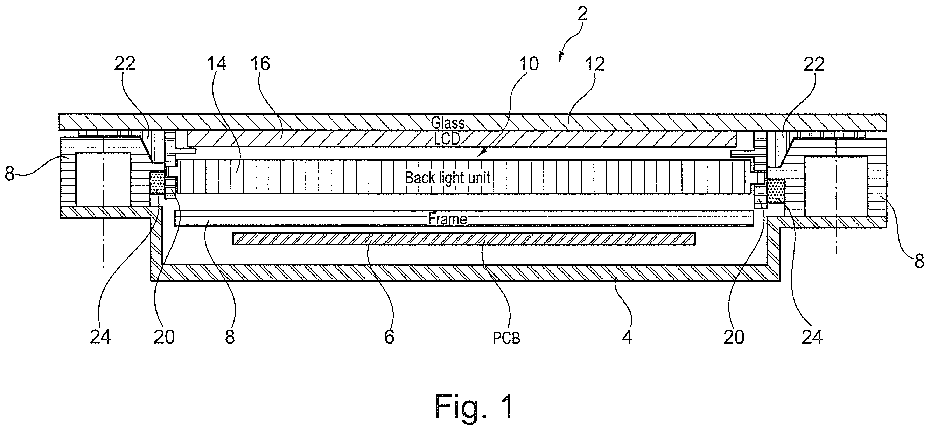

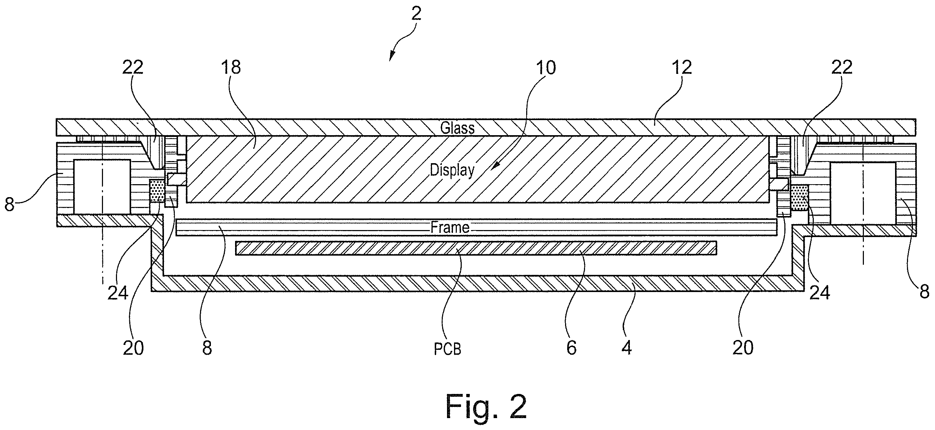

In den Fign. 1 und 2 ist jeweils eine erfindungsgemäße Anzeigeeinheit in ihrer Gesamtheit mit dem Bezugszeichen 2 bezeichnet. Die Anzeigeeinheit 2 weist mehrere Teile auf, die eine rückseitige Abdeckung 4, eine elektrische Leiterplatte 6, einen Tragrahmen 8, ein flächiges Anzeigeelement 10 und eine transparente Abdeckscheibe 12 umfassen.

In dem Beispiel der Fig. 1 umfasst das flächige Anzeigeelement 10 eine Hintergrundbeleuchtungseinheit (sog. Back Light Unit) 14 und ein hinterleuchtetes flächiges LCD-Panel 16. In dem Beispiel der Fig. 2 umfasst das flächige Anzeigeelement 10 einen Flachmonitor (sog. Flat Panel Display oder Screen) 18, der bspw. als ein LED-, OLED-Monitor ausgebildet ist.

In beiden Beispielen umfasst das flächige Anzeigeelement 10 einen Anzeigerahmen 20, der das Anzeigeelement zumindest abschnittsweise außen umgibt. Der Anzeigerahmen 20 besteht aus einem gut wärmeleitfähigen Material, bspw. Magnesium oder Aluminium. Selbstverständlich kann der Rahmen 20 jedoch auch aus einem anderen Material bestehen. Der Anzeigerahmen 20 hält das flächige Anzeigeelement 10 bzw. 14, 16 oder 18 und führt die während des Betriebs der Lichtquellen des flächigen Anzeigeelements 10 entstehende Abwärme ab.

Im Rahmen des Zusammenbaus der Anzeigeeinheit 2 werden zunächst mindestens zwei der Teile der Anzeigeeinheit 2 mittels eines ersten Klebstoffs 22 aneinander befestigt. In den Beispielen wird ein erstes Teil in Form der transparenten Abdeckscheibe 12 mittels des ersten Klebstoffs 22 an einem zweiten Teil in Form des Tragrahmens 8 befestigt. Zusätzlich kann der erste Klebstoff 22 verwendet werden, um weitere Teile der Anzeigeeinheit 2, bspw. den Anzeigerahmen 20, an dem Tragrahmen 8 bzw. der Abdeckscheibe 12 zu befestigen. Als erster Klebstoff 22 wird vorzugsweise ein chemisch härtender Klebstoff verwendet. Insbesondere wird vorgeschlagen, dass als erster Klebstoff 22 ein 2-Komponenten-Klebstoff verwendet wird, der chemisch aushärtet.

Mindestens zwei der Teile der Anzeigeeinheit 2 werden mittels eines zweiten UV-härtenden Klebstoffs 24 miteinander verklebt. In den Beispielen wird ein erstes Teil in Form des Anzeigerahmens 20 an einem zweiten Teil in Form des Tragrahmens 8 befestigt. Somit sind der Anzeigerahmen 20 und der Tragrahmen 8 sowohl durch den chemisch härtenden Klebstoff 22 als auch durch den UV-härtenden Klebstoff 24 aneinander befestigt. Mit anderen Worten, die mindestens zwei Teile 20, 8 der Anzeigeeinheit 2, die mittels des chemisch härtenden Klebstoffs 22 verklebt werden, und die mindestens zwei Teile 20, 8 der Anzeigeeinheit 2, die mittels des UV-härtenden Klebstoffs 24 verklebt werden, umfassen zwei gleiche Teile der Anzeigeeinheit 2, nämlich den Anzeigerahmen 20 und den Tragrahmen 8.

Die elektrische Leiterplatte 6 wird vorzugsweise an dem Tragrahmen 8 befestigt. Alternativ oder zusätzlich wird vorgeschlagen, dass das flächige Anzeigeelement 10 an der elektrischen Leiterplatte 6 elektrisch kontaktiert wird. Die elektrische Leiterplatte 6 steht mit Anschlussmittel, bspw. in der Form eines Steckers oder einer Buchse, in Verbindung, über die die Leiterplatte 6 an eine übergeordnete Steuereinheit (sog. Body Controller) des Kraftfahrzeugs und/oder an eine Energiequelle (z.B. eine Fahrzeugbatterie) des Kraftfahrzeugs angeschlossen werden kann. Über elektrische Leiterbahnen, die auf der Leiterplatte 6 ausgebildet sind, wird die elektrische Energie der Energiequelle und/oder werden die Ansteuersignale von der übergeordneten Steuereinheit an das flächige Anzeigeelement 10 weitergeleitet. Abhängig von den Ansteuersignalen kann das Anzeigeelement 10 gewünschte Informationen darstellen.

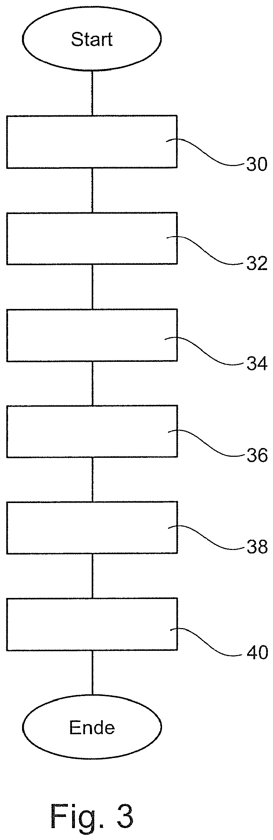

Zum Zusammenbauen der Anzeigeeinheit 2 wird zunächst der erste Klebstoff 22 zwischen die damit zu verbindenden Teile der Anzeigeeinheit 2 eingebracht (Schritt 30 in Fig. 3). Der Tragrahmen 8 und der Anzeigerahmen 20 mit dem daran gehaltenen Anzeigeelement 10 werden auf die transparente Abdeckscheibe 12 aufgesetzt (Schritt 32). Das Aushärten des ersten Klebstoffs 22 nimmt relativ lange in Anspruch. Ein vollständiges Aushärten kann unter Umständen erst nach mehreren Stunden erreicht werden.

Um trotzdem zeitnah mit dem Zusammenbau der Anzeigeeinheit 2 fortfahren zu können, wird ein zweiter UV-härtender Klebstoff 24 zwischen den Tragrahmen 8 und den Anzeigerahmen 20 eingebracht (Schritt 34) und mittels UV-Strahlung ausgehärtet (Schritt 36). Damit ist das flächige Anzeigeelement 10 in einer definierten Position zu dem Tragrahmen 8 festgelegt, so dass mit dem Zusammenbau fortgefahren werden kann, obwohl der erste Klebstoff 22 noch viskos oder gar flüssig ist. Die Leiterplatte 6 wird an der Rückseite des Tragrahmens 8 befestigt, bspw. mittels separater Befestigungsmittel (z.B. Schrauben, Nieten, Bolzen) oder mittels eines Klebstoffs (Schritt 38). Erst nachdem der UV-härtende Klebstoff 24 mittels UV-Strahlung ausgehärtet worden ist (Schritt 36), wird die rückseitige Abdeckung 4 an dem Tragrahmen 8 befestigt, bspw. mittels separater Befestigungsmittel (z.B. Schrauben, Nieten, Bolzen) oder mittels eines Klebstoffs (Schritt 40). Es wird angemerkt, dass die Schritte 30 bis 36 auch in einer Reihenfolge ausgeführt werden können, die von der in Fig. 3 dargestellten Reihenfolge abweicht.

Die Anzeigeeinheit 2 ist bevorzugt zum Einbau in eine Einbauöffnung in einer Armaturentafel des Kraftfahrzeugs ausgebildet. Besonders bevorzugt ist die Anzeigeeinheit 2 als ein im eingebauten Zustand einem Fahrer des Kraftfahrzeugs zugewandtes Kombiinstrument, insbesondere als ein freiprogrammierbares Kombiinstrument, als ein in einer Mittelkonsole der Armaturentafel angeordnetes Zentraldisplay oder als ein im eingebauten Zustand einem oder mehreren der Mitfahrer zugewandtes Passengerdisplay ausgebildet.

## Patentansprüche

1. Verfahren zum Zusammenbau einer Anzeigeeinheit (2) eines Kraftfahrzeugs, wobei die Anzeigeeinheit (2) mehrere Teile aufweist, die Teile umfassend eine rückseitige Abdeckung (4), eine elektrische Leiterplatte (6), einen Tragrahmen (8), ein flächiges Anzeigeelement (10) und eine transparente Abdeckscheibe (12), wobei mindestens zwei der Teile (8, 12, 20) der Anzeigeeinheit (2) mittels eines ersten Klebstoffs (22) aneinander befestigt werden,
**dadurch gekennzeichnet, dass**
als erster Klebstoff (22) ein chemisch härtender Klebstoff verwendet wird und dass mindestens zwei der Teile (8, 20) der Anzeigeeinheit (2) mittels eines UV-härtenden Klebstoffs (24) miteinander verklebt werden.

2. Verfahren nach Anspruch 1, **dadurch gekennzeichnet, dass** als erster Klebstoff (22) ein 2-Komponenten-Klebstoff verwendet wird.

3. Verfahren nach Anspruch 1 oder 2, **dadurch gekennzeichnet, dass** die mindestens zwei Teile (8, 12, 20) der Anzeigeeinheit (2), die mittels des chemisch härtenden Klebstoffs (22) verklebt werden, und die mindestens zwei Teile (8, 20) der Anzeigeeinheit (2), die mittels des UV-härtenden Klebstoffs (24) verklebt werden, mindestens zwei gleiche Teile (8, 20) der Anzeigeeinheit (2) umfassen.

4. Verfahren nach einem der vorhergehenden Ansprüche, **dadurch gekennzeichnet, dass** die transparente Abdeckscheibe (12) und der Tragrahmen (8) mittels des chemisch härtenden Klebstoffs (22) miteinander verklebt werden.

5. Verfahren nach einem der vorhergehenden Ansprüche, **dadurch gekennzeichnet, dass** das flächige Anzeigeelement (10) einen Anzeigerahmen (20) aufweist und dass die transparente Abdeckscheibe (12) und/oder der Tragrahmen (8) einerseits und der Anzeigerahmen (20) andererseits mittels des chemisch härtenden Klebstoffs (22) miteinander verklebt werden.

6. Verfahren nach einem der vorhergehenden Ansprüche, **dadurch gekennzeichnet, dass** das flächige Anzeigeelement (10) einen Anzeigerahmen (20) aufweist und dass der Tragrahmen (8) und der Anzeigerahmen (20) mittels des UV-härtenden Klebstoffs (24) miteinander verklebt werden.

7. Verfahren nach einem der vorhergehenden Ansprüche, **dadurch gekennzeichnet, dass** die elektrische Leiterplatte (6) an dem Tragrahmen (8) befestigt wird und/oder das flächige Anzeigeelement (10) an der elektrischen Leiterplatte (6) elektrisch kontaktiert wird.

8. Verfahren nach einem der vorhergehenden Ansprüche, **dadurch gekennzeichnet, dass** die rückseitige Abdeckung (4) an dem Tragrahmen (8) befestigt wird und dass vor dem Befestigen der rückseitigen Abdeckung (4) an dem Tragrahmen (8) der UV-härtende Klebstoff (24) mittels UV-Strahlung gehärtet wird.

9. Anzeigeeinheit (2) eines Kraftfahrzeugs, wobei die Anzeigeeinheit (2) mehrere Teile aufweist, die Teile umfassend eine rückseitige Abdeckung (4), eine elektrische Leiterplatte (6), einen Tragrahmen (8), ein flächiges Anzeigeelement (10) und eine transparente Abdeckscheibe (12), wobei mindestens zwei der Teile (8, 12, 20) der Anzeigeeinheit (2) mittels eines ersten Klebstoffs (22) aneinander befestigt sind,
**dadurch gekennzeichnet, dass**
die Anzeigeeinheit (2) nach einem Verfahren nach einem der vorhergehenden Ansprüche zusammengebaut ist.

10. Anzeigeeinheit (2) nach Anspruch 9, **dadurch gekennzeichnet, dass** das flächige Anzeigeelement (10) einen Flachmonitor (18) oder ein durch eine Hintergrundbeleuchtungseinheit (14) hinterleuchtetes flächiges LCD-Panel (16) umfasst

11. Anzeigeeinheit (2) nach Anspruch 9 oder 10, **dadurch gekennzeichnet, dass** die Anzeigeeinheit (2) zum Einbau in eine Einbauöffnung in einer Armaturentafel des Kraftfahrzeugs ausgebildet ist.

12. Anzeigeeinheit (2) nach einem der Ansprüche 9 bis 11, **dadurch gekennzeichnet, dass** die Anzeigeeinheit (2) als ein im eingebauten Zustand einem Fahrer des Kraftfahrzeugs zugewandtes Kombiinstrument, insbesondere als ein freiprogrammierbares Kombiinstrument, als ein in einer Mittelkonsole der Armaturentafel angeordnetes Zentraldisplay oder als ein im eingebauten Zustand einem oder mehreren der Mitfahrer zugewandtes Passengerdisplay ausgebildet ist.
